# EUROPEAN PATENT SPECIFICATION

(11) **EP 4 372 620 B1**
(45) Date of publication and mention of the grant of the patent: **24.06.2026**
(21) Application number: 24168317.6
(22) Date of filing: 04.04.2018
(51) Int. Cl.: G06F 17/16, G06N 3/04, G06N 3/063, G06T 1/20

(54) **NEURAL NETWORK PROCESSOR AND NEURAL NETWORK COMPUTATION METHOD**
PROZESSOR FÜR NEURONALES NETZWERK UND BERECHNUNGSVERFAHREN FÜR NEURONALES NETZWERK
PROCESSEUR DE RÉSEAU NEURONAL ET PROCÉDÉ DE CALCUL DE RÉSEAU NEURONAL

(30) Priority: 06.04.2017 CN 201710222232; 07.04.2017 CN 201710227493; 19.04.2017 CN 201710256444; 21.04.2017 CN 201710266052; 05.05.2017 CN 201710312415
(43) Date of publication of application: 22.05.2024
(62) Divisional of application: 19199521.6
(73) Proprietor: Shanghai Cambricon Information Technology Co., Ltd, Shanghai 201306 (CN)
(72) Inventor: CHEN, Tianshi, Beijing, 100191 (CN); CHEN, Xiaobing, Beijing, 100191 (CN); ZHI, Tian, Beijing, 100191 (CN); DU, Zidong, Beijing, 100191 (CN)
(74) Representative: Boult Wade Tennant LLP

(56) References cited:
- RAKESH KUMAR ET AL: "Single-ISA Heterogeneous Multi-Core Architectures for Multithreaded Workload Performance", ACM SIGARCH COMPUTER ARCHITECTURE NEWS, ACM SPECIAL INTEREST GROUP ON COMPUTER ARCHITECTURE, 2 PENN PLAZA, SUITE 701 NEW YORK NY 10121-0701 USA, vol. 32, no. 2, 2 March 2004 (2004-03-02), pages 64, XP058266826, ISSN: 0163-5964, DOI: 10.1145/1028176.1006707
- ABU ASADUZZAMAN ET AL: "Evaluation of Application-Specific Multiprocessor Mobile System Parallel Programming View project Big Data Analysis for Vehicular Networks View project Evaluation of Application-Specific Multiprocessor Mobile System", 1 January 2004 (2004-01-01), XP055663700, Retrieved from the Internet <URL:https://www.researchgate.net/profile/Abu_Asaduzzaman2/publication/255589675_Evaluation_of_Application-Specific_Multiprocessor_Mobile_System/links/54e6086d0cf277664ff2016d/Evaluation-of-Application-Specific-Multiprocessor-Mobile-System.pdf> [retrieved on 20200130]

## Description

### TECHNICAL FIELD

The present disclosure relates to the technical field of artificial intelligence, and in particularly to a neural network processor and neural network computation method.

### BACKGROUND

Artificial neural networks (ANN) abstract human neural networks from the perspective of information processing to establish simple models and create different networks according to different ways of connections. Currently, artificial neural networks have made great progress in many fields, and are widely used to solve practical problems in pattern recognition, intelligent robots, automatic control, predictive estimation, biology, medicine, economy, and other fields.

As a new type of dedicated processor, single-core neural network processors use special instructions to fully utilize parallelism of neural networks to perform neural network computations. However, since single-core neural network processors need to be compatible with most neural network models and support different existing neural networks and neural network computations with different scales, existing single-core neural network processors often have complex structures and high cost. In addition, single-core neural network processors also have problems of wasting hardware resources and high power consumption overhead. Meanwhile, single-core neural network processors are not accelerated for parallelism between different layers during a neural network computation, and still have room for optimization.

In this situation, it has become a direction for the improvement of neural network computation devices to complete neural network computations, make full use of neural network computation devices, and reduce redundancy in functional components by aiming at different neural network models and the scale of neural network computations under the condition of fully utilizing parallelism within a layer and between different layers during neural network computations.

RAKESH KUMAR ET AL: "Single-ISA Heterogeneous Multi-Core Architectures for Multithreaded Workload Performance",ACM SIGARCH COMPUTER ARCHITECTURE NEWS, ACM SPECIAL INTEREST GROUP ON COMPUTER ARCHITECTURE, 2 PENN PLAZA, SUITE 701 NEW YORK NY 10121-0701 USA, vol. 32, no. 2, 2 March 2004, proposes and evaluates a heterogeneous multi-core processor design in which cores with different microarchitectural complexities share a single ISA, and shows that dynamically or statically scheduling multithreaded workloads across such cores can improve overall performance and energy efficiency compared to homogeneous multi-core architectures.

### SUMMARY

### (I) Technical Problem to be Solved

The present disclosure provides a neural network processor and neural network computation method. The processor and method may at least partially solve the technical problems as mentioned above.

### (II) Technical Solutions

An aspect of the present disclosure provides a neural network processor including: a memory, a cache, and a heterogeneous processor;
the memory may be configured to store data and instructions for a neural network computation;
the cache may be connected to the memory via a memory bus;
the heterogeneous processor may be connected to the cache via a cache bus, for reading the data and the instructions for the neural network computation through the cache to accomplish the neural network computation, returning the computation result to the cache, and controlling the cache so that the computation result is written back into the memory.

In some embodiments, the heterogeneous processor may include:
at least two different types of computation cores for executing a neural network computation or a neural network layer computation; and
one or more logic control cores configured to determine to perform a neural network computation or a neural network layer computation by dedicated cores and/or generic cores according to data of the neural network computation.

In some embodiments, the plurality of computation cores may include x generic cores and y dedicated cores, where the dedicated cores may be dedicated to perform assigned neural network/ neural network layer computations, and the generic cores may be configured to perform arbitrary neural network/ neural network layer computations.

In some embodiments, the generic core may be a CPU, and the dedicated core may be an NPU.

In some embodiments, the cache may include a shared cache and/or a non-shared cache, where one shared cache may be correspondingly connected to at least two cores in the heterogeneous processor via the cache bus, and one non-shared cache may be correspondingly connected to one core in the heterogeneous processor via the cache bus.

In some embodiments, the logic control core may be connected to the cache via the cache bus, may be configured to read data of the neural network computation through the cache, and may determine to perform a neural network computation and/or a neural network layer computation by taking the dedicated core and/or the generic core as a target core according to type and parameters for the neural network model in the data of the neural network computation.

In some embodiments, the logic control core may send a signal to the target core via a control bus directly, or via the cache, so as to control the target core to perform a neural network computation and/or a neural network layer computation.

The other aspect of the present disclosure provides a neural network computation method, in which using the neural network processor to perform a neural network including:
reading, by a logic control core in a heterogeneous processor, data and instructions of the neural network computation from a memory through a cache; and
determining, by the logic control core in the heterogeneous processor, to perform a neural network computation and/or a neural network layer computation by dedicated cores and/or generic cores according to type and parameters for the neural network model in data of the neural network computation.

In some embodiments, the determining by the logic control core in the heterogeneous processor to perform the neural network layer computation by dedicated cores and/or generic cores according to the type and parameters for the neural network model in the data of the neural network computation may include:
determining, by the logic control core in the heterogeneous processor, whether or not an eligible dedicated core exists according to the type and parameters for the neural network model in the data of the neural network computation;
if a dedicated core m is eligible, the dedicated core m may be used as a target core; and the logic control core in the heterogeneous processor may send a signal to the target core and may send addresses corresponding to the data and the instructions of the neural network computation to the target core;
acquiring, by the target core, the data and the instructions of the neural network computation from the memory through a shared or non-shared cache according to the addresses, performing the neural network computation, and outputting a computation result to the memory through the shared or non-shared cache, thereby accomplishing the computation;
if no eligible dedicated core exists, the logic control core in the heterogeneous processor may send a signal to a generic core, and may send the addresses corresponding to the data and the instructions of the neural network computation to the generic core;
acquiring, by the generic core, the data and the instructions of the neural network computation from the memory through a shared or non-shared cache according to the addresses, performing the neural network computation, and outputting a computation result to the memory through the shared or non-shared cache, thereby accomplishing the computation;

In some embodiments, the eligible dedicated core may refer to a dedicated core that supports an assigned neural network computation and supports the scale of the assigned neural network computation.

In some embodiments, the determining by the logic control core in the heterogeneous processor to perform the neural network computation by dedicated cores and/or generic cores according to the type and parameters for the neural network model in the data of the neural network computation may include:
analyzing, by the logic control core in the heterogeneous processor, the type and parameters for the neural network model in the data, determining for each neural network layer respectively whether an eligible dedicated core exists, and allocating a corresponding generic core or dedicated core for each neural network layer, to obtain a core sequence corresponding to the neural network layer;
sending, by the logic control core in the heterogeneous processor, addresses corresponding to data and the instructions of the neural network layer computation to the dedicated core or generic core corresponding to the neural network layer, and sending a serial number of a next dedicated core or generic core in the core sequence to the dedicated core or generic core corresponding to the neural network layer;
reading, by the dedicated core and generic core corresponding to the neural network layer, the data, and the instructions of the neural network layer computation from the addresses, performing the neural network layer computation, and sending a computation result to an assigned address of the shared and/or non-shared cache;
controlling, by the logic control core, the shared and/or non-shared cache to write the computation result of the neural network layer back to the memory, thereby completing the computation.

In some embodiments, the eligible dedicated core may refer to a dedicated core that supports an assigned neural network layer computation and supports the scale of the assigned neural network layer computation.

In some embodiments, the neural network computation may include a pulse neural network computation; the neural network layer computation may include a convolution, a fully connected layer computation, a concatenation computation, a bitwise addition/multiplication, a Relu computation, a pooling computation and/or a Batch Norm computation on the neural network layer.

### (III) Technical Effects

It can be learnt from the above technical solutions that the neural network processor and neural network computation method according to the present disclosure may have at least one of the following technical effects:
(1) By using a heterogeneous processor for a neural network computation, different cores can be selected for the computations according to the type and scale of the actual neural network, thereby the actual computational capacity of hardware may be fully utilized, and the cost and the power consumption may be reduced.
(2) Different cores perform computations of different layers, and the computations of different layers are performed in parallel, thereby parallelism of the neural network may be fully utilized, and the efficiency of the neural network computation may be improved.

### BRIEF DESCRIPTION OF THE DRAWINGS

The drawings are intended to facilitate further understanding of the present disclosure and constitute a part of the specification, and, together with the embodiments below, serve to explain the present disclosure, rather than limit the present disclosure. In the drawings:
FIG. 1 schematically shows a heterogeneous multicore neural network processor according to one embodiment of the present disclosure.
FIG. 2 schematically shows a heterogeneous multicore neural network processor according to another embodiment of the present disclosure.
FIG. 3 is a flow chart of a neural network computation method according to another embodiment of the present disclosure.
FIG. 4 is a flow chart of a neural network computation method according to another embodiment of the present disclosure.
FIG. 5 schematically shows a heterogeneous multicore neural network processor according to another embodiment of the present disclosure.
FIG. 6 schematically shows a heterogeneous multicore neural network processor according to another embodiment of the present disclosure.

### DETAILED DESCRIPTION

To facilitate the understanding of the object, technical solutions, and advantages of the present disclosure, the present disclosure will be further described in detail below with reference to the specific embodiments and drawings.

It should be noted that in the drawings or the description of the specification, the similar reference numbers are used for similar or identical parts. Implementing modes not shown or described in the drawings are known to those of ordinary skill in the art. Additionally, although examples including parameters of specific values may be provided herein, it should be understood that the parameters are not necessarily exactly equal to the corresponding values, but may approximate the corresponding values within acceptable tolerances or design constraints. The directional terms mentioned in the embodiments, such as "upper", "lower", "front", "back", "left", "right", *etc.,* only refer to the directions in the drawings. Therefore, the directional terms here are used to describe, rather than limit, the scope of protection of the present disclosure.

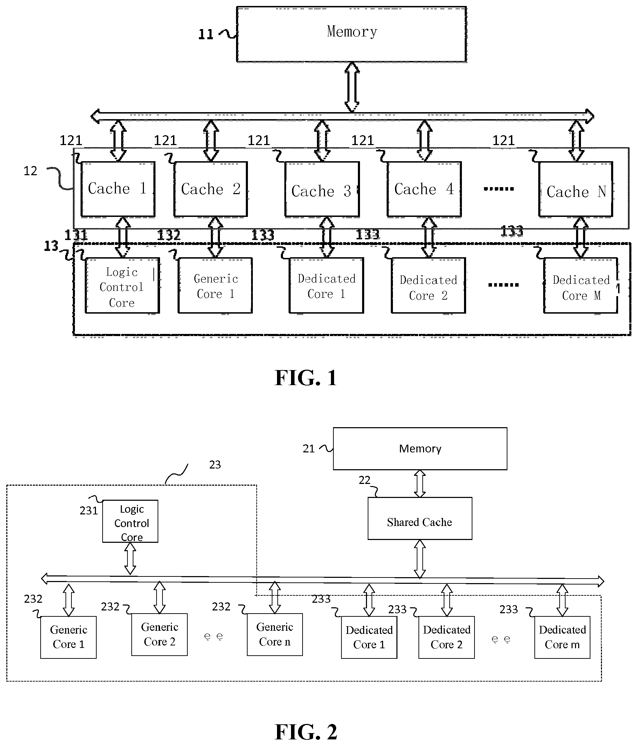

An embodiment of the present disclosure provides a heterogeneous multi-core neural network processor, as shown in FIG. **1****,** including: a memory **11,** a non-shared cache **12,** and a heterogeneous processor 13.

The memory 11 is configured to store data and instructions of a neural network computation, where the data may include offsets, weights, input data, output data, types and parameters for the neural network model, and the like. Of course, the output data may not be stored in the memory; the instructions may include all kinds of instructions corresponding to the neural network computation, such as CONFIG instructions, COMPUTE instructions, IO instructions, NOP instructions, JUMP instructions, MOVE instructions, and the like. The data and the instructions stored in the memory 11 can be transmitted to the heterogeneous processor **13** through the non-shared cache 12.

The non-shared cache **12** may include a plurality of caches **121,** in which each cache may be connected to the memory 11 via a memory bus and may be connected to the heterogeneous processor 13 via a cache bus, to fulfill data exchanges between the heterogeneous processor 13 and the non-shared cache **12,** as well as the non-shared cache **12** and the memory 11. When the data or instructions of the neural network computation required by the heterogeneous processor **13** are not stored in the non-shared cache **12,** the non-shared cache **12** may read the required data or instructions from the memory **11** via the memory bus first, and then transmit the required data or instructions to the heterogeneous processor **13** via the cache bus.

The heterogeneous processor **13** includes a logic control core **131,** a generic core **132,** and a plurality of dedicated cores **133,** and both of the logic control core **131** and the generic core **132** and each of the dedicated cores **133** may be connected to corresponding caches **121** via the cache bus.

The heterogeneous processor **13** may be configured to read the instructions and data of the neural network computation from the non-shared cache **12,** complete the neural network computation, and return a computation result to the non-shared cache **12** to control the non-shared cache **12** to write the computation result back to the memory **11.**

The logic control core **131** may read the data and the instructions of the neural network computation from the non-shared cache **12,** and, according to a claimed embodiment, determine whether a dedicated core **133** that is capable of supporting the neural network computation and supporting the scale of the neural network computation exists according to the type and parameters for the neural network model in the data. If such dedicated core exists, the neural network computation is accomplished by the dedicated core **133;** if such dedicated core does not exist, the neural network computation is completed by the generic core **132.** In order to determine a location of a dedicated core and whether it is idle, a table (called a dedicated/ generic core information table) may be configured for each kind of core (dedicated cores supporting a same layer belong to one class, and the generic core belongs to one class), in the table serial numbers (or addresses) of a same kind of cores and whether they are currently idle may be recorded. All cores may be initially idle, and then the change of idle state may be maintained by direct or indirect communication between the logic control core and other cores. The serial numbers of the cores in the table can be acquired by scanning once during initialization of the network processor, so that the dynamically configurable heterogeneous processor may be supported (in other words, type and count of dedicated processors in the heterogeneous processor can be changed at any time, and the core information table is scanned and updated after the change). Optionally, the dynamic configuration of the heterogeneous processor may not be supported, and in this case, the serial numbers of the cores in the table may only need to be fixed without a need of scanning and updating for several times. Optionally, if the serial numbers of each type of dedicated cores are always continuous, a reference address may be recorded, and then a number of consecutive bits may be used to represent these dedicated cores, and bit 0 or 1 can indicates whether these dedicated cores are idle. In order to determine the type and parameters for the network model, a decoder can be set in the logic control core to determine a type of a network layer according to an instruction, and can determine whether the instruction is a generic core instruction or dedicated core instruction; and the parameters, data addresses, and the like may also be analyzed from the instruction. Optionally, the data may be configured to include a data head containing serial numbers and size of each network layer, addresses of corresponding computing data and instructions, and the like, and a special analyzer (either software or hardware) may be provided to analyze the information. Optionally, the analyzed information may be stored in a specified area. In order to determine which core to use based on the analyzed network layer serial number and size, a content addressable memory (CAM) may be set in the logic control core, and the content in the CAM may be implemented as configurable, which may require the logic control core to provide some instructions to configure/write this CAM. The contents in the CAM may include the network layer serial numbers, maximum scale that each dimension can support, and addresses of dedicated cores supporting a layer in the dedicated core information table as well as an address of the generic core in the generic core information table. Under this scheme, an analyzed layer serial number may be used to find a corresponding item in a table, and compare with a scale limit; if the corresponding item is found in the table, the addresses of the dedicated cores in the dedicated core information table may be adopted to find an idle dedicated core, and a control signal may be sent according to a serial number of the idle dedicated core and a computing task is assigned to the idle dedicated core; if a corresponding layer is not found in the CAM, or the scale limit is exceeded, or no idle core exists in the dedicated core information table, the address of the generic core information table may be adopted to find an idle generic core, a control signal may be sent according to a serial number of the generic core and a computing task may be assigned to the generic core; if no idle core is found in both tables, the task may be added to a waiting queue together with some necessary information; once an idle core capable of computing this task exists, the task may be assigned to the core for computation.

Of course, a location of a dedicated core and whether the dedicated core is idle may be determined in many ways. The above-mentioned method of determining the location of the dedicated core and whether the dedicated core is idle is only an illustrative explanation. Each dedicated core **133** can independently perform a type of neural network computation, such as a spiking neural network (SNN) computation and other designated neural network computations, write a computation result back to a correspondingly connected cache **121** of the dedicated core, and control the cache **121** to write the computation result back to the memory **11.**

The generic core **132** can independently complete a neural network computation beyond the computation scale supported by a dedicated core or that is not supported by any dedicated core **133,** write a computation result back to a correspondingly connected cache **121,** and control the cache **121** to write the computation result back to the memory **11.**

One embodiment of the present disclosure provides a heterogeneous multi-core neural network processor, as shown in FIG. 2, including: a memory **21,** a shared cache **22,** and a heterogeneous processor **23.**

A memory **21** may be configured to store data and instructions of a neural network computation, where the data may include offsets, weights, input data, output data, and type and parameters for the neural network model; the instructions may include various kinds of instructions corresponding to the neural network computation. The data and the instructions stored in the memory can be transmitted to the heterogeneous processor **23** through the shared cache **22.**

A shared cache **22** may be connected to the memory **21** via a memory bus, and may be connected to the heterogeneous processor **23** via a cache bus to achieve data exchanges between the heterogeneous processor **23** and the shared cache **22** as well as the shared cache **22** and the memory **21.**

When the data and the instructions of the neural network computation required by the heterogeneous processor **23** are not stored in the cache **22,** the shared cache **22** may read the required data or instructions from the memory **21** via the memory bus first, and then transmit the required data or instructions to the heterogeneous processor **23** via the cache bus.

The heterogeneous processor **23** may include a logic control core **231,** a generic core **232** and a plurality of dedicated cores **233,** and both of the logic control core **231** and the generic core **232** and each of the dedicated cores **233** may be connected to the shared caches **22** via the cache bus.

The heterogeneous processor **23** may be configured to read the data and the instructions of the neural network computation from the shared cache **22,** complete the neural network computation, send a computation result to the cache **22,** and control the shared cache **22** to write the computation result back to the memory **21.**

In addition, when data transmission is required between the logic control core **231** and the generic cores **232,** between the logic control core **231** and the dedicated cores **233,** among the generic cores **232,** and among the dedicated cores **233,** a core that sends data can first transmit the data to the shared cache **22** via the shared cache bus, and then transmit the data to a core that receives data without passing through the memory **21.**

As to the neural network computation, a neural network model of the neural network computation may generally include a plurality of neural network layers, each of the neural network layers may perform a corresponding computation with a computation result of a previous neural network layer, and a computation result of a present layer may be output to a next neural network layer, in which a computation result of a last neural network layer may be a result of the whole neural network computation. In the heterogeneous multi-core neural network processor of this embodiment, both of the generic cores **232** and the dedicated cores **233** can perform a computation of a neural network layer, and the logic control core **231,** the generic cores **232,** and the dedicated cores **233** can complete a neural network computation jointly. Hereinafter, a neural network layer is referred to as a layer for convenience of description.

Each of the dedicated cores **233** can independently perform a computation of a layer, *e.g.,* a convolution computation, a fully connected layer computation, a concatenation computation, a bitwise addition/multiplication, a Relu computation, a pooling computation or Batch Norm computation of a neural network layer, *etc.,* and computation scale of the neural network layer cannot be too large, in other words, the computation scale of the neural network layer cannot exceed computation scale of a neural network layer supported by a corresponding dedicated core, which means a computation of the dedicated core may impose limitations on a count of neurons and synapses in the layer. Upon completion of the computation of the layer, a computation result may be written back to the shared cache **22.**

The generic cores **232** may be configured to perform a computation of a layer exceeding the computation scale supported by the dedicated cores **233** or a computation of a layer that is not supported by any of the dedicated cores, write a computation result back to the shared cache **22,** and control the shared cache **22** to write the computation result back to the memory **21.**

Furthermore, after a dedicated core **233** and a generic core **232** write computation results back to the memory **21,** the logic control core **231** may send a signal of starting computation to a dedicated core or generic core that performs a computation of a next layer, and notify the dedicated core or generic core that performs the computation of the next layer to start the computation.

Even furthermore, a dedicated core **233** and a generic core **232** may start a computation after receiving a signal of starting computation sent from a dedicated core or generic core that performs a computation of a previous layer and when no layer computation is being performed currently; if a layer computation is currently being performed, the computation may not be started until the current layer computation is completed and a computation result of the current layer computation is written back to the shared cache **22.**

The logic control core **231** may read the data of the neural network computation from the shared cache **22,** analyze each layer of the neural network model for the type and parameters of the neural network model in the data. As for each layer, the logic control core **231** may determine whether or not a dedicated core **233** that supports a computation of the layer and supports the computation scale of this layer exists. If such dedicated core exists, the computation of the layer may be performed by the corresponding dedicated core **233,** and if such dedicated core does not exist, the computation of the layer may be performed by a generic core **232.** The logic control core **231** may also provide corresponding addresses of the data and the instructions required for layer computations by the generic cores **232** and the dedicated cores **233,** and the generic cores **232** and the dedicated cores **233** may read the data and the instructions at the corresponding addresses, and perform the layer computations.

As for a dedicated core **233** and a generic core **232** that execute a computation of a first layer, the logic control core **231** may send a signal of starting computation to the dedicated core **233** or the generic core **232** at the beginning of the computation, and after the neural network computation is completed, a dedicated core **233** or a generic core **232** that performs a computation of a last layer may send a signal of starting computation to the logic control core **231.** After receiving the signal of starting computation, the logic control core **231** may control the shared cache **22** to write a computation result back to the memory **21.**

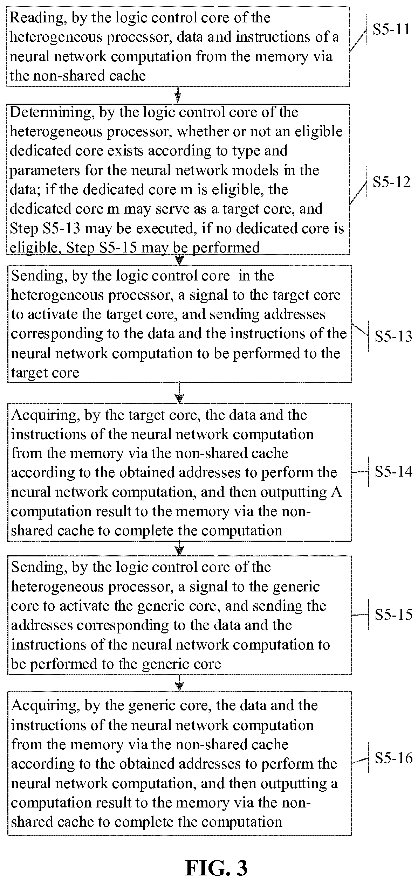

One embodiment of the present disclosure provides a method for performing a neural network computation by the heterogeneous multi-core neural network processor of the first embodiment. As shown in FIG. **3****,** the method includes:
Step **S5-11:** reading, by the logic control core **131** of the heterogeneous processor **13,** data and instructions of a neural network computation from the memory **11** via the non-shared cache **12;**
Step **S5-12:** determining, by the logic control core **131** of the heterogeneous processor **13,** whether or not an eligible dedicated core exists according to type and parameters for the neural network model in the data, where the term "eligible" may refer to that the dedicated core supports the neural network computation and supports scale of the neural network computation (a scale restriction may be inherent in the dedicated core, which may be provided by a design manufacturer of the core; or the scale restriction may be imposed by users, *e.g*., it may be found by experiments that beyond certain scale, the generic core is more effective; the scale restriction may be set when configuring the CAM). If the dedicated core m is eligible, the dedicated core m may serve as a target core, and Step **S5-13** may be performed, if no dedicated core is eligible, Step **S5-15** may be performed, where m is a serial number of the dedicated core, 1 ≦ m ≦ M, M is a count of the dedicated cores;
Step **S5-13:** sending, by the logic control core **131** in the heterogeneous processor **13,** a signal to the target core to activate the target core, and sending addresses corresponding to the data and the instructions of the neural network computation to be performed to the target core at the same time;
Step **S5-14:** acquiring, by the target core, the data and the instructions of the neural network computation from the memory **11** via the non-shared cache **12** according to the obtained addresses to perform the neural network computation, and then outputting a computation result to the memory **11** via the non-shared cache **12** to complete the computation;
further, following the Step **S5-12,** if no eligible dedicated core exists, Steps **S5-15** and **S5-16** may be performed subsequently;
Step **S5-15:** sending, by the logic control core **131** of the heterogeneous processor **13,** a signal to the generic core **132** to activate the generic core **132,** and sending the addresses corresponding to the data and the instructions of the neural network computation to be performed to the generic core **132** at the same time;
Step **S5-16:** acquiring, by the generic core **132,** the data and the instructions of the neural network computation from the memory **11** via the non-shared cache **12** according to the obtained addresses to perform the neural network computation, and then outputting a computation result to the memory **11** via the non-shared cache **12** to complete the computation.

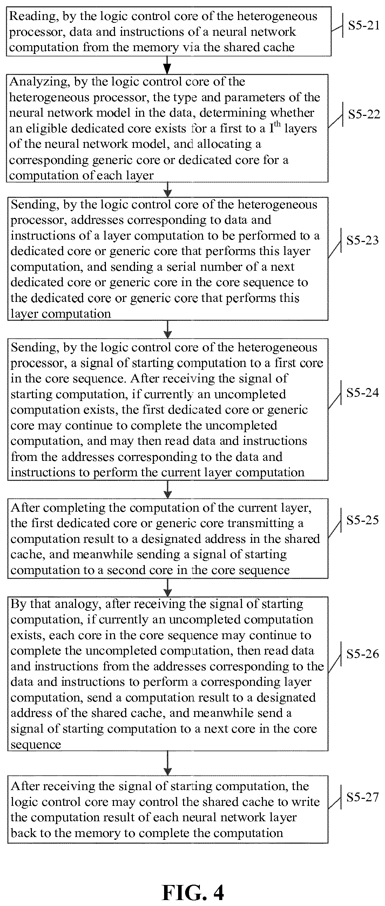

One embodiment of the present disclosure provides a method for performing a neural network computation by the heterogeneous multi-core neural network processor according to the second embodiment. As shown in FIG. **4****,** the method includes:
Step **S5-21:** reading, by the logic control core **231** of the heterogeneous processor **23,** data and instructions of a neural network computation from the memory **21** via the shared cache **22;**
Step **S5-22:** analyzing, by the logic control core **231** of the heterogeneous processor **23,** type and parameters of the neural network model in the data, determining whether an eligible dedicated core exists for each of a first to a I^{th} layers of the neural network model, where I is a count of the layers of the neural network model, and the term "eligible" may refer to that a dedicated core supports a computation of a layer and supports computation scale of the layer, and allocating a corresponding generic core or dedicated core for a computation of each layer.

As for the computation of a i^{th} layer of the neural network model, 1 ≦ i ≦ I, if the dedicated core m is eligible, the dedicated core m may be chosen to perform a computation of the i^{th} layer of the neural network model, where m is a serial number of the dedicated core, 1 ≦ m ≦ M, M is a count of the dedicated cores. If no dedicated core is eligible, the generic core M+n may be chosen to perform the computation of the i^{th} layer of the neural network model, where M+n is a serial number of the generic core, 1 ≦ n ≦ N, N is a count of the generic cores, where the dedicated cores **233** and the generic cores **232** are numbered uniformly (in other words, the dedicated cores and the generic cores may be numbered together, for example, for x dedicated cores and y generic cores, the dedicated cores and the generic cores can be numbered from 1 to x+y, and each dedicated core or each generic core corresponds to a serial number from 1 to x+y; certainly, the dedicated cores and the generic cores may also be numbered separately, for example, for x dedicated cores and y generic cores, the dedicated cores can be numbered from 1 to x, and the generic cores can be numbered from 1 to y, and each dedicated core or each generic core corresponds to a serial number). However, in this situation, a number of a dedicated core may be the same as a number of a generic core, but the two numbers are the same only in terms of logical numbers, and the dedicated core and the generic core can be addressed according to their physical addresses to obtain a core sequence corresponding to the computations of the first to I^{th} layers of the neural network model finally. In other words, this core sequence may contain I elements in total, and each element may be a dedicated core or a generic core, and the dedicated core or the generic core corresponds to the computation of the first to the I^{th} layers of the neural network model sequentially. For example, a core sequence **1a**, **2b... il**, where **1, 2, i** represent serial numbers of the neural network layers, and **a, b, 1** represent serial numbers of the dedicated cores or generic cores.

Step **S5-23:** sending, by the logic control core **231** of the heterogeneous processor **23,** addresses corresponding to data and instructions of a layer computation to be performed to a dedicated core or generic core that performs this layer computation, and sending a serial number of a next dedicated core or generic core in the core sequence to the dedicated core or generic core that performs this layer computation, where it is a serial number of the logic control core that is sent to a dedicated core or generic core executing a last layer computation;
Step **S5-24:** sending, by the logic control core **231** of the heterogeneous processor **23,** a signal of starting computation to a first core in the core sequence. After receiving the signal of starting computation, if currently an uncompleted computation exists, the first dedicated core **233** or generic core **232** may continue completing the uncompleted computation, and may then read data and instructions from the addresses corresponding to the data and the instructions to perform the current layer computation;
Step **S5-25:** after completing the computation of the current layer, the first dedicated core **233** or generic core **232** transmitting a computation result to a designated address in the shared cache **22,** and meanwhile sending a signal of starting computation to a second core in the core sequence;
Step **S5-26:** by that analogy, after receiving the signal of starting computation, if currently an uncompleted computation exists, each core in the core sequence may continue completing the uncompleted computation, then read data and instructions from the addresses corresponding to the data and the instructions to perform a corresponding layer computation, send a computation result to a designated address of the shared cache **22,** and meanwhile send a signal of starting computation to a next core in the core sequence, where a last core in the core sequence may send a signal of starting computation to the logic control core **231;**
Step **S5-27:** after receiving the signal of starting computation, the logic control core **231** may control the shared cache **22** to write the computation result of each neural network layer back to the memory **21** to complete the computation.

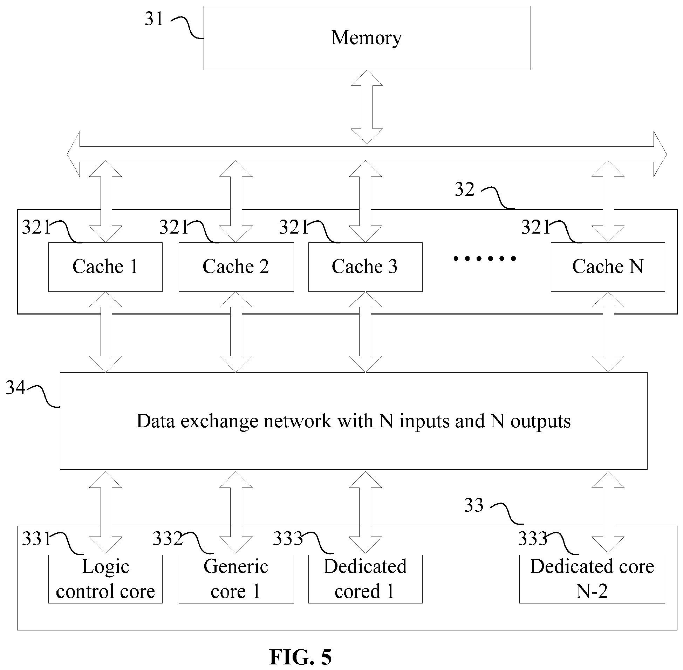

As shown in FIG. **5****,** the embodiment is a further extension of the first embodiment. The cache **121** in Embodiment **1** (FIG. **1****)** is dedicated to each core, and a dedicated core **1** can only access a cache **3,** but no other caches, so do the other cores, so the non-shared cache **12** formed by **121** has a non-shared nature. However, if a core **j** uses a computation result of a core i (i≠j) (the result is initially stored in a cache corresponding to the core i), the core i must first write this result from the cache to the memory **11,** and then the core j reads the result from the memory **11** into a cache that the core j can access, after this process, the core **j** can use this result. To make this process more convenient, an N × N data exchange network **34** is added, for example, a crossbar may be used to realize the data exchange network, so that each core **(331** or **332** or **333)** can access all caches **(321).** At this point **32** has a shared nature.

A method for performing a neural network computation by the device of the embodiment as shown in FIG. **5** includes:
Step **S5-31:** reading, by the logic control core **331** in the heterogeneous processor **33,** data and instructions of a neural network computation from the memory **31** through the cache **32;**
Step **S5-32:** determining, by the logic control core **331** in the heterogeneous processor **33,** whether or not an eligible dedicated core exists according to type and parameters for the neural network model in the data, where the term "eligible" may refer to that the dedicated core supports the neural network computation and supports the scale of the neural network computation; if the dedicated core m is eligible, the dedicated core m may serve as a target core, and Step **S5-33** may be performed, if no dedicated core is eligible, Step **S5-35** may be performed, where m is a serial number of the dedicated core;
Step **S5-33:** sending, by the logic control core **331** in the heterogeneous processor **33,** a signal to the target core to activate the target core, and sending addresses corresponding to the data and the instructions of the neural network computation to be performed to the target core at the same time;
Step **S5-34:** acquiring, by the target core, the data and the instructions of the neural network computation according to the obtained addresses (from the cache **32)** to perform the neural network computation, and then storing a computation result to the cache **32** to complete the computation;
Step **S5-35:** sending, by the logic control core **331** in the heterogeneous processor **33,** a signal to the generic core **332** to activate the generic core **332,** and sending the addresses corresponding to the data and the instructions of the neural network computation to be performed to the generic core **332** at the same time;
Step **S5-36:** acquiring, by the generic core **332,** the data and the instructions of the neural network computation according to the obtained addresses (from the cache **32)** to perform the neural network computation, and then storing the computation result to the cache **32** to complete the computation.

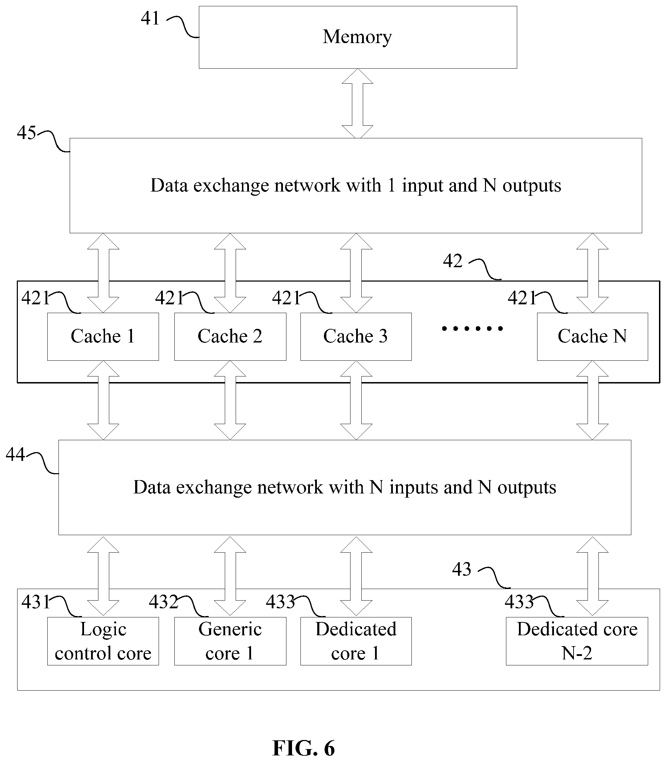

Further, a way of connection between the memory and the cache may be changed, thereby producing a new embodiment as shown in FIG. **6****.** Compared with the embodiment shown in FIG. **5****,** a difference may be shown in the way of connection between a memory **41** and a cache **42.** The embodiment of FIG. **5** uses a bus for connecting, and when the plurality of caches **321** write the memory **31,** the plurality of caches need to queue, which may not be efficient (see FIG. **5****).** By abstracting the structure in FIG. **6** as a data exchange network with 1 input and N outputs, a function of data exchange network with 1 input and N outputs can be implemented by using a variety of topologies, such as a star structure (both of the memory **41** and the N caches **421** are connected via dedicated pathways), a tree structure (the memory **41** is at the root position, while the caches **421** are at the leaf positions), and the like.

It should be noted that the present disclosure does not make any limitation on a count of the logic control cores, a count of the dedicated cores, a count of the generic cores, a count of the shared or non-shared caches, and a count of the memories, and they can be properly adjusted according to specific requirements for the neural network computation.

Heretofore, the embodiments of the present disclosure have been described in detail in conjunction with the drawings. Based on the above description, those skilled in the art should have a clear understanding of the neural network processor and neural network computation method of the present disclosure.

In some embodiments, the present disclosure provides a chip including an above-mentioned neural network processor.

In some embodiments, the present disclosure further provides a chip package structure including the above-mentioned chip.

In some embodiments, the present disclosure further provides a board including the above-mentioned chip package structure.

In some embodiments, the present disclosure further provides an electronic device including the above-mentioned board.

The electronic device may include a data processing device, a robot, a computer, a printer, a scanner, a tablet, a smart terminal, a mobile phone, a driving recorder, a navigator, a sensor, a camera, a server, a cloud server, a camera, a video camera, a projector, a watch, an earphone, a mobile storage, a wearable device, a transportation, a household appliance, and/or a medical facility.

The transportation includes an airplane, a ship, and/or a vehicle. The household appliance includes a television set, an air conditioner, a microwave oven, a refrigerator, a rice cooker, a humidifier, a washing machine, an electric lamp, a gas stove, and a range hood. The medical device includes a nuclear magnetic resonance instrument, a B-ultrasound machine, and/or an electrocardiograph.

It should be noted that, for the sake of brevity, the foregoing method embodiments are all described as a combination of a series of actions, but those skilled in the art should understand that the present disclosure is not limited by the described sequence of actions, because certain steps may be performed in other sequences or concurrently in accordance with the present disclosure. Furthermore, those skilled in the art should also understand that the embodiments described in the specification are all optional embodiments, and the actions and units involved are not necessarily required by the present disclosure.

The above various embodiments are described with different focuses, and the parts that are not detailed in a certain embodiment can be found in the related descriptions of other embodiments.

In the several embodiments provided herein, it should be understood that the disclosed device may be implemented in other ways. For example, the device embodiments described above are merely illustrative. For example, the division of the units is only a logical functional division. In actual implementations, there may be other dividing manners, for example, combining multiple units or components or integrating them into another system, or ignoring or not executing some features. In addition, the mutual coupling or direct coupling or communication connection shown or discussed may be indirect coupling or communication connection through some interfaces, devices or units, and may be in an electrical form or other forms.

The units described as separate components may or may not be physically separated, and the components presented as units may or may not be physical units; that is, they may be located in one place, or may be distributed to multiple network units. Some or all of the units may be selected according to actual needs to achieve the purpose of the technical solution of the embodiment.

In addition, the respective functional units in the respective embodiments of the present disclosure may be integrated into one processing unit, or each unit may exist in a physically independent manner, or two or more units may be integrated in one unit. The above integrated unit can be implemented in the form of hardware or in the form of a software program unit.

The integrated unit, if implemented in the form of a functional software unit and sold or used as a standalone product, may be stored in a computer readable memory. Based on such understanding, the essence of the technical solution of the present disclosure or the part of the technical solution which makes a contribution to the prior art or the whole or part of the technical solution may be embodied in the form of a software product. The computer software product is stored in a memory which includes a number of instructions for causing a computer device (which may be a personal computer, server or network device, *etc*.) to perform all or some of the steps of the method described in each embodiment of the present disclosure. The foregoing memory includes various media that can store program codes, such as USB stick, Read-Only Memory (ROM), Random Access Memory (RAM), removable hard disk, magnetic disk, CD, and the likes.

Those skilled in the art may understand that all or some of the steps in the methods of the above embodiments can be completed with related hardware instructed by a program. The program can be stored in a computer readable memory. The memory may include: flash disk, Read-Only Memory (ROM), Random Access Memory (RAM), magnetic disk, CD, and the likes.

The above description of the disclosed embodiments enables those skilled in the art to implement or use the present disclosure. Various modifications to these embodiments are obvious to those skilled in the art, and the general principles defined herein may be implemented in other embodiments without departing from the scope of the present disclosure.

It should be noted that the implementations that are not shown or described in the drawings or the description are all known to those skilled in the art, and are not described in detail. In addition, the above definitions of the various elements and methods are not limited to the specific structures, shapes or manners mentioned in the embodiments, and modifications and alternation can be readily conceived by those skilled in the art.

The foregoing embodiments further explain the objective, the technical solution, and the advantageous effects of the present disclosure. It is appreciated that the foregoing is merely specific embodiments of the present disclosure, and is not intended to be limiting.

## Claims

1. A neural network processor, which comprises: a heterogeneous processor **,**
the heterogeneous processor includes a logic control core, a generic core, and a dedicated core, the dedicated core is dedicated to perform a neural network computation or neural network layer computation, the generic core is configured to perform a computation that is not supported by the dedicated core, and the logic control core is configured to determine to perform a neural network computation or a neural network layer computation by the dedicated core or by the generic core and
the logic control core is further configured to determine eligibility to perform a neural network computation or a neural network layer computation by the dedicated core or by the generic core according to type and parameters for a neural network model in the data for the computation, if the dedicated core is eligible, the logic control core determines to perform the neural network computation or the neural network layer computation by the dedicated core; if the dedicated core is not eligible, the logic control core determines to perform the neural network computation or the neural network layer computation by the generic core.

2. The neural network processor of claim 1, wherein the logic control core comprises a decoder, the decoder is configured to determine whether an instruction is a generic core instruction or a dedicated core instruction, if the instruction is a generic core instruction, the logic control core determines to perform the neural network computation or the neural network layer computation by the generic core, and if the instruction is a dedicated core instruction, the logic control core determines to perform the neural network computation or the neural network layer computation by the dedicated core.

3. The neural network processor of claim 1, wherein it further comprises a non-shared cache, the non-shared cache includes a plurality of caches, the logic control core, the generic core and the dedicated core are all connected to corresponding caches.

4. The neural network processor of claim 1, wherein , it further comprises a shared cache, the logic control core, the generic core and the dedicated core are all connected to the shared cache.

5. The neural network processor of claim 3 or 4, wherein it further comprises a memory configured to store the data and result for the computation, the non-shared cache or the shared cache is connected to the memory, for receiving the data for the computation sent from the memory to be provided to the heterogeneous processor and writing computation result provided by the heterogeneous processor back into the memory.

6. A neural network computation method, which comprises:
receiving, by a heterogeneous processor of a neural network processor according to any of claims 1-5, data and
instructions for a neural network computation or a neural network layer computation; and
using the data and the instructions for the neural network computation or the neural network layer computation to perform the computation.

7. The neural network computation method of claim 6, wherein the logic control core comprises a decoder, the decoder determining whether an instruction is a generic core instruction or a dedicated core instruction, if the instruction is a generic core instruction, the logic control core determining to perform the neural network computation or the neural network layer computation by the generic core, and if the instruction is a dedicated core instruction, the logic control core determining to perform the neural network computation or the neural network layer computation by the dedicated core.

8. The neural network computation method of claim 6, wherein the neural network processor further comprises a non-shared cache, the non-shared cache includes a plurality of caches, the logic control core, the generic core and the dedicated core are all connected to corresponding caches.

9. The neural network computation method of claim 6, wherein the neural network processor further comprises a shared cache, the logic control core, the generic core and the dedicated core are all connected to the shared cache.

10. The neural network computation method of claim 8 or 9, wherein the neural network processor further comprises a memory configured to store the data and result for the computation, the non-shared cache or the shared cache is connected to the memory, for receiving the data for the computation sent from the memory to be provided to the heterogeneous processor and writing computation result provided by the heterogeneous processor back into the memory.

## Patentansprüche

1. Ein Prozessor für neuronales Netzwerk, welcher umfasst: einen heterogenen Prozessor, wobei der heterogene Prozessor einen Logiksteuerungskern, einen generischen Kern und einen dedizierten Kern umfasst, wobei der dedizierte Kern dazu vorgesehen ist, eine neuronale Netzwerkberechnung oder neuronale Netzwerkschichtberechnung auszuführen, der generische Kern dazu konfiguriert ist, eine Berechnung auszuführen, die durch den dedizierten Kern nicht unterstützt ist, und wobei der Logiksteuerungskern dazu konfiguriert ist, zu bestimmen, eine neuronale Netzwerkberechnung oder eine neuronale Netzwerkschichtberechnung durch den dedizierten Kern oder durch den generischen Kern auszuführen, und
wobei der Logiksteuerungskern ferner dazu konfiguriert ist, Berechtigung zu bestimmen, eine neuronale Netzwerkberechnung oder eine neuronale Netzwerkschichtberechnung durch den dedizierten Kern oder durch den generischen Kern gemäß einem Typ und Parametern für einen neuronalen Netzwerkmodell in den Daten für die Berechnung auszuführen, wobei der Logiksteuerungskern bestimmt, die neuronale Netzwerkberechnung oder die neuronale Netzwerkschichtberechnung durch den dedizierten Kern auszuführen, wenn der dedizierte Kern berechtigt ist; wobei der Logiksteuerungskern bestimmt, die neuronale Netzwerkberechnung oder die neuronale Netzwerkschichtberechnung durch den generischen Kern auszuführen, wenn der dedizierte Kern nicht berechtigt ist.

2. Der Prozessor für neuronales Netzwerk nach Anspruch 1, wobei der Logiksteuerungskern einen Decoder umfasst, wobei der Decoder dazu konfiguriert ist, zu bestimmen, ob ein Befehl ein Befehl des generischen Kerns oder ein Befehl des dedizierten Kerns ist; wobei der Logiksteuerungskern bestimmt, die neuronale Netzwerkberechnung oder die neuronale Netzwerkschichtberechnung durch den generischen Kern auszuführen, wenn der Befehl ein Befehl des generischen Kerns ist, und wobei der Logiksteuerungskern bestimmt, die neuronale Netzwerkberechnung oder die neuronale Netzwerkschichtberechnung durch den dedizierten Kern auszuführen, wenn der Befehl ein Befehl des dedizierten Kerns ist.

3. Der Prozessor für neuronales Netzwerk nach Anspruch 1, wobei er ferner einen nicht gemeinsam genutzten Cache umfasst, der nicht gemeinsam genutzte Cache eine Vielzahl von Caches umfasst, der Logiksteuerungskern, der generische Kern und der dedizierte Kern alle mit entsprechenden Caches verbunden sind.

4. Der Prozessor für neuronales Netzwerk nach Anspruch 1, wobei er ferner einen gemeinsam genutzten Cache umfasst, der Logiksteuerungskern, der generische Kern und der dedizierte Kern alle mit dem gemeinsam genutzten Cache verbunden sind.

5. Der Prozessor für neuronales Netzwerk nach Anspruch 3 oder 4, wobei er ferner einen Speicher umfasst, der zum Speichern der Daten und des Ergebnisses für die Berechnung konfiguriert ist, der nicht gemeinsam genutzte Cache oder der gemeinsam genutzte Cache mit dem Speicher verbunden ist, um die aus dem Speicher gesendeten Daten für die Berechnung zu empfangen, die dem heterogenen Prozessor bereitgestellt werden sollen, und um durch den heterogenen Prozessor bereitgestelltes Berechnungsergebnis zurück in den Speicher zu schreiben.

6. Ein Berechnungsverfahren für neuronales Netz, welches umfasst:
Empfangen von Daten und Befehlen für eine neuronale Netzwerkberechnung oder eine neuronale Netzwerkschichtberechnung durch einen heterogenen Prozessor eines prozessors für neuronales Netzwerk nach einem der Ansprüche 1 bis 5; und
Verwenden der Daten und der Befehle für die neuronale Netzwerkberechnung oder die neuronale Netzwerkschichtberechnung zur Ausführung der Berechnung.

7. Das Berechnungsverfahren für neuronales Netzwerk nach Anspruch 6, wobei der Logiksteuerungskern einen Decoder umfasst, wobei der Decoder bestimmt, ob ein Befehl ein Befehl des generischen Kerns oder ein Befehl des dedizierten Kerns ist; wobei der Logiksteuerungskern bestimmt, die neuronale Netzwerkberechnung oder die neuronale Netzwerkschichtberechnung durch den generischen Kern auszuführen, wenn der Befehl ein Befehl des generischen Kerns ist, und der Logiksteuerungskern bestimmt, die neuronale Netzwerkberechnung oder die neuronale Netzwerkschichtberechnung durch den dedizierten Kern auszuführen, wenn der Befehl ein Befehl des dedizierten Kerns ist.

8. Das Berechnungsverfahren für neuronales Netzwerk nach Anspruch 6, wobei der Prozessor für neuronales Netzwerk ferner einen nicht gemeinsam genutzten Cache umfasst, der nicht gemeinsam genutzte Cache eine Vielzahl von Caches umfasst, der Logiksteuerungskern, der generische Kern und der dedizierte Kern alle mit entsprechenden Caches verbunden sind.

9. Das Berechnungsverfahren für neuronales Netzwerk nach Anspruch 6, wobei der Prozessor für neuronales Netzwerk ferner einen gemeinsam genutzten Cache umfasst, der Logiksteuerungskern, der generische Kern und der dedizierte Kern alle mit dem gemeinsam genutzten Cache verbunden sind.

10. Das Berechnungsverfahren für neuronales Netzwerk nach Anspruch 8 oder 9, wobei der Prozessor für neuronales Netzwerk ferner einen Speicher umfasst, der dazu konfiguriert ist, die Daten und das Ergebnis für die Berechnung zu speichern, der nicht gemeinsam genutzte Cache oder der gemeinsam genutzte Cache mit dem Speicher verbunden ist, um die aus dem Speicher gesendeten Daten für die Berechnung zu empfangen, die dem heterogenen Prozessor bereitgestellt werden sollen, und um durch den heterogenen Prozessor bereitgestellte Berechnungsergebnis zurück in den Speicher zu schreiben.

## Revendications

1. Un processeur de réseau nerveux comprenant: un processeur hétérogène,
le processeur hétérogène comprend un cœur de contrôle logique, un cœur générique et un cœur dédié, le cœur dédié étant dédié à l'exécution d'un computation de réseau nerveux ou d'un computation de couche de réseau nerveux, le cœur générique étant configuré pour effectuer un computation qui n'est pas supporté par le cœur dédié, et le cœur de contrôle logique étant configuré pour déterminer d'effectuer un computation de réseau nerveux ou un computation de couche de réseau nerveux par le cœur dédié ou par le cœur générique, et
le cœur de contrôle logique est en outre configuré pour déterminer l'éligibilité à effectuer un computation de réseau nerveux ou un computation de couche de réseau nerveux par le cœur dédié ou par le cœur générique en fonction du type et des paramètres d'un modèle de réseau nerveux dans les données pour le computation, si le cœur dédié est éligible, le cœur de contrôle logique détermine d'effectuer le computation de réseau nerveux ou le computation de couche de réseau nerveux par le cœur dédié; si le cœur dédié n'est pas éligible, le cœur de contrôle logique détermine d'effectuer le computation de réseau nerveux ou le computation de couche de réseau nerveux par le cœur générique.

2. Processeur de réseau nerveux selon la revendication 1, dans lequel le cœur de contrôle logique comprend un décodeur, le décodeur étant configuré pour déterminer si une instruction est une instruction de cœur générique ou une instruction de cœur dédié, si l'instruction est une instruction de cœur générique, le cœur de contrôle logique détermine d'effectuer le computation de réseau nerveux ou le computation de couche de réseau nerveux par le cœur générique, et si l'instruction est une instruction de cœur dédié, le cœur de contrôle logique détermine d'effectuer le computation de réseau nerveux ou le computation de couche de réseau nerveux par le cœur dédié.

3. Processeur de réseau nerveux selon la revendication 1, dans lequel il comprend en outre un cache non partagé, le cache non partagé comprenant une pluralité de caches, le cœur de contrôle logique, le cœur générique et le cœur dédié étant tous connectés à des caches correspondants.

4. Processeur de réseau nerveux selon la revendication 1, dans lequel il comprend en outre un cache partagé, le cœur de contrôle logique, le cœur générique et le cœur dédié étant tous connectés au cache partagé.

5. Processeur de réseau nerveux selon la revendication 3 ou 4, dans lequel il comprend en outre une mémoire configurée pour stocker les données et le résultat du computation, le cache non partagé ou le cache partagé étant connecté à la mémoire pour recevoir les données du computation envoyées de la mémoire afin d'être fournies au processeur hétérogène et pour réécrire le résultat du computation fourni par le processeur hétérogène dans la mémoire.

6. Un procédé de computation de réseau nerveux comprenant:
la réception, par un processeur hétérogène d'un processeur de réseau nerveux selon l'une quelconque des revendications 1 à 5, de données et d'instructions pour un computation de réseau nerveux ou un computation de couche de réseau nerveux; et
l'utilisation des données et des instructions pour le computation de réseau nerveux ou le computation de couche de réseau nerveux afin d'effectuer le computation.

7. Procédé de computation de réseau nerveux selon la revendication 6, dans lequel le cœur de contrôle logique comprend un décodeur déterminant si une instruction est une instruction de cœur générique ou une instruction de cœur dédié, si l'instruction est une instruction de cœur générique, le cœur de contrôle logique déterminant d'effectuer le computation de réseau nerveux ou le computation de couche de réseau nerveux par le cœur générique, et si l'instruction est une instruction de cœur dédié, le cœur de contrôle logique déterminant d'effectuer le computation de réseau nerveux ou le computation de couche de réseau nerveux par le cœur dédié.

8. Procédé de computation de réseau nerveux selon la revendication 6, dans lequel le processeur de réseau nerveux comprend en outre un cache non partagé, le cache non partagé comprenant une pluralité de caches, le cœur de contrôle logique, le cœur générique et le cœur dédié étant tous connectés à des caches correspondants.

9. Procédé de computation de réseau nerveux selon la revendication 6, dans lequel le processeur de réseau nerveux comprend en outre un cache partagé, le cœur de contrôle logique, le cœur générique et le cœur dédié étant tous connectés au cache partagé.

10. Procédé de computation de réseau nerveux selon la revendication 8 ou 9, dans lequel le processeur de réseau nerveux comprend en outre une mémoire configurée pour stocker les données et le résultat du computation, le cache non partagé ou le cache partagé étant connecté à la mémoire pour recevoir les données du computation envoyées de la mémoire afin d'être fournies au processeur hétérogène et pour réécrire le résultat du computation fourni par le processeur hétérogène dans la mémoire.
